# EUROPEAN PATENT SPECIFICATION

(11) **EP 0 651 190 B1**
(45) Date of publication and mention of the grant of the patent: **16.10.1996**
(21) Application number: 94306249.7
(22) Date of filing: 24.08.1994
(51) Int. Cl.: F16K 31/50, F16K 31/60, F16K 35/00, F16K 51/02, G05G 23/00

(54) **Flow rate control valve**
Durchflussregelventil
Vanne de régulation de débit

(30) Priority: 17.09.1993 JP 230612/93
(43) Date of publication of application: 03.05.1995
(73) Proprietor: Kiyohara, Masako, Kumamoto-shi Kumamoto-ken (JP)
(72) Inventor: Itoi, Shigeru, Nishi-ku, Osaka (JP); Kojima, Tetsuya, Nishi-ku, Osaka (JP)
(74) Representative: Daley, Michael John

(56) References cited:
- FR-A- 2 235 790
- US-A- 3 475 005

## Description

The present invention relates to an improved flow rate control valve for use in fluid ducts mainly in semiconductor manufacturing apparatus and nuclear power generation plant, and more particularly to a diaphragm type flow control valve capable of finely adjusting the flow rate.

Generally the control valve for high purity gas used in semiconductor manufacturing apparatus or the like is severely required to possess particle-free and dead space-free characteristics. In the field of semiconductor manufacture, therefore, the diaphragm type control valves (especially direct touch type diaphragm valves) are widely used being structurally adapted to cope with the particle-free and dead space-free requirements.

The diaphragm type control valve is, however, generally very small in the working stroke of diaphragm, and is not suited, by nature, to adjustment of flow rate or the like. In particular, it is extremely difficult to adjust finely the flow rate by manual operation.

Accordingly, the applicant of the invention, to solve such problems, developed a diaphragm type control valve capable of adjusting the flow rate finely and accurately by manual operation, and disclosed it as the Japanese Patent Application JP-A-5-79570.

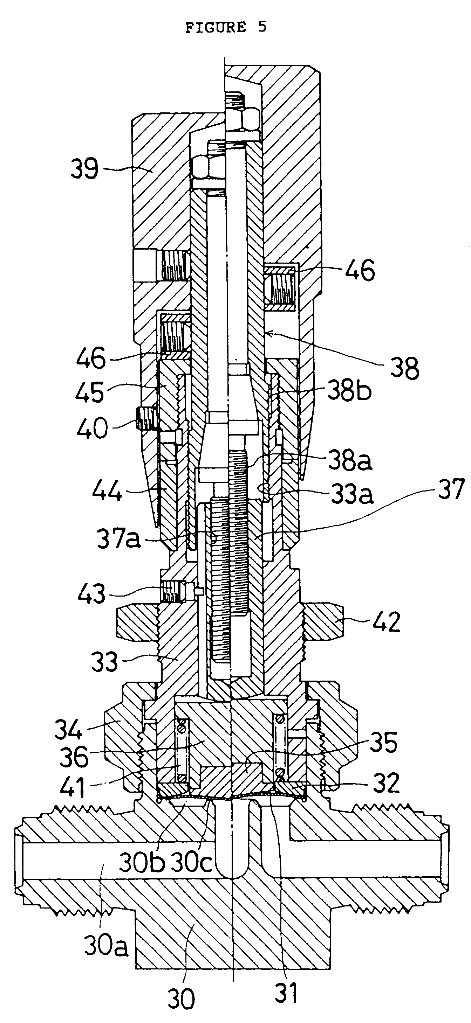

Such control valve is composed of, as shown in Figure 5 of the accompanying drawings, a body 30 possessing a fluid passage 30a, a valve seat 30c and a valve chamber 30b, a diaphragm 31 contacting and separating from the valve seat 30c, a tubular cover or bonnet 33 with the lower end inserted into the valve chamber 30b to hold the peripheral edge of the diaphragm 31 air tightly through a holding adapter 32 and having a female thread part 33a in the upper inner circumference, a bonnet nut 34 for fixing the bonnet 33 to the body 30, a disc 36 accommodated inward at the lower end of the bonnet 33 and having a diaphragm holder 35, a tubular slide stem 37 elevatably inserted into the bonnet 33 above the disc 36 in a rotation forbidden state and having in the inner circumference a female thread part 37a of a smaller thread pitch than the thread pitch of the female thread part 33a of the bonnet 33, a rotary stem 38 having both concentrically, at the inner side, a first male thread part 38a to be engaged with the female part 37a of the slide stem 37, and at the outer side, a second male thread part 38b to be engaged with the female thread part 33a of the bonnet 33, thereby elevating and lowering the slide stem 37 by its rotation, a nearly tubular handle 39 fixed at the upper end of the rotary stem 38, with the lower end enclosing the upper outer circumference of the bonnet 33, and a handle lock screw 40 provided in the handle 39, among others.

In Figure 5, reference numeral 41 denotes a spring, 42 is a panel fixing nut, 43 is a rotation preventing screw, 44 is an indicator, 45 is a cap nut, and 46 is a stopper.

In the control valve shown in Figure 5, when the rotary stem 38 is rotated by the rotary manipulation of the handle 39, the rotary stem 38 rotates and moves up or down as its second male thread part 38b is engaged with the female thread part 33a of the bonnet 33.

When the rotary stem 38 ascends or descends while rotating, by the rotation of the inside first male thread part 38a engaging with the female thread part 37a of the slide stem 37, the slide stem 37 is moved up or down in rotation forbidden state. That is, when the rotary stem 38 makes one revolution, the slide stem 37 moves up or down by the distance equal to the difference between the thread pitch of the second male thread part 38b and the thread pitch of the first male thread part 38a.

Therefore, this control valve, by properly setting the thread pitch difference of the first male thread part 38a and second male thread part 38b, the ascending or descending extent of the slide stem 37 corresponding to the rotation of the rotary stem 38, that is, the stroke of the diaphragm 31 can be adjusted very finely. As a result, fine flow rate adjustment of high precision is realised by manual operation, and hence excellent practical effects are brought about.

Two methods of operating the control valve are used. One is a method of using while adjusting the fluid flow rate by continuously opening or closing the handle 39, and the other method is to set a specific flow rate by fixing in advance the opening degree of the valve at a predetermined value.

In the latter method, when the flow rate reaches the set flow rate by rotating the handle 39, the handle 39 is fastened to the bonnet (cap nut 45) side by the lock screw 40 to prevent the stems 37, 38 from rotating and moving up or down, so that the flow rate may be kept at a set value.

In this control valve, however, when the lock screw 40 is tightened, the handle 39 moves in a direction orthogonal to the axial line of the handle 39 by a distance equal to a gap between the inner circumference of the handle 39 and the bonnet 33 side (cap nut 45 and indicator 44). As a result, the stems 37, 38 are dislocated by being subject to the pressing force in the same direction as the handle 39, and the set flow rate may vary between before and after locking of the handle 39. In particular, since the control valve is for fine flow rate adjustment, even if the stems 37, 38 are slightly dislocated, the set flow rate fluctuates, which is a serious problem.

The invention is devised in order to solve such problem, and it is an object thereof to present a flow rate control valve so that the set flow rate may not change before and after locking if the handle is locked in order to hold the desired valve opening degree.

The invention is defined by the appended claim 1, the preamble of which is based on JP-A-5-79570.

In order to achieve the object, the invention provides a flow rate control valve, supporting a stem on a body possessing a fluid passage, a valve chamber, and a valve seat, rotatably and elevatably through a bonnet, fixing a handle to the upper end of the stem for rotational manipulation thereof and for enclosing the upper outer circumference of the bonnet having in the handle a lock screw capable of contacting with the bonnet side locking the handle to the bonnet side by tightening the lock screw to the bonnet side, wherein the handle is composed of a handle main body fixed to the upper end of the stem, and a tubular lock handle enclosing the upper outer circumference of the bonnet, coupled to the lower end of the handle main body and movable in the direction orthogonal to the axial line of the stem, and the lock screw is provided in the lock handle in a direction almost orthogonal to the axial line of the stem.

By tightening the lock screw provided in the lock handle, only the lock handle moves in a direction orthogonal to the axial line of the stem by a distance corresponding to a gap between the inner circumference of the lock handle and the bonnet side, and the inner circumference of the lock handle is pressed to the bonnet side. As a result, the handle is locked, and the stem can neither rotate nor move up and down.

In this flow rate control valve, when the handle is locked, only the lock handle moves in a direction orthogonal to the axial line of the stem, and the handle main body fixed on the stem is not subject to the pressing force applied in the direction in which the lock handle is moved. Accordingly, the stem is not subject to the pressing force in the same direction. As a result, the dislocation of the stem due to locking of the handle can be prevented, and the set flow rate does not change between before and after locking of the handle.

An embodiment of the invention will now be described by way of example and with reference to the accompanying drawings wherein:-
Figure 1 is a magnified longitudinal sectional view of a diaphragm type flow control valve in an embodiment of the invention;
Figure 2 is a magnified sectional view along line II - II in Figure 1;
Figure 3 is a magnified longitudinal sectional view of essential parts in handle locked state;
Figure 4 is a magnified sectional view along IV - IV in Figure 3.

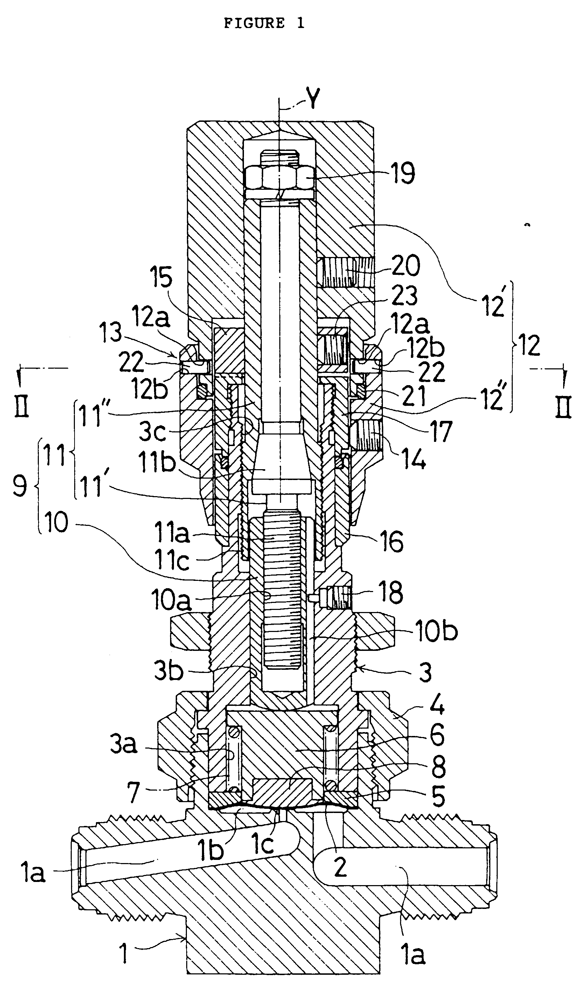

Figure 1 shows control valve designed for fine control at high precision by manual operation, and also to open and close a fluid passage 1a by causing a diaphragm to directly contact with or depart from a valve seat 1c.

In Figure 1, reference numeral 1 denotes a body, 2 is a diaphragm, 3 is a hood or bonnet, 4 is a bonnet nut, 5 is a holding adapter, 6 is a disc, 7 is a spring, 8 is a diaphragm holder, 9 is a stem composed of a sliding stem part 10 and a rotary stem part 11, 12 is a handle, 13 is a coupling mechanism, 14 is a lock screw, and 15 is a stopper.

The body 1 is made of metal material such as stainless steel of generally cruciform cross section, and the fluid passage 1a is formed inside. Above the body 1, a concave valve chamber 1b, with an open top, communicating with the fluid passage 1a is formed, and a valve seat 1c is integrally formed with the body 1 in the bottom of the valve chamber 1b.

The diaphragm 2 is a thin metal plate of stainless steel, spring steel, shape memory alloy or the like, and formed in a dish form swelling in the upward direction in the middle, and its outer periphery is placed on the outer periphery of the bottom of the valve chamber 1b, and the middle part is allowed to move up and down to contact with and depart from the valve seat 1c. The diaphragm 2 is pressed to the bottom side of the valve chamber 1b to be held and fixed in airtight state between the annular holding adapter 5 inserted into the valve chamber 1b and the lower end of the bonnet 3, by tightening the bonnet nut 4 threadably fitted in the body 1.

The bonnet 3 is of tubular form, and the inner diameter of the lower part to be inserted into the body 1 is large, and it is an accommodating part 3a receiving the disc 6. The inner diameter of the middle part of the bonnet 3 is slightly small, which is a guide part 3b guiding the slide stem 10 explained later. Furthermore, the inner diameter of the upper part of the bonnet 3 is slightly large, and a female thread part 3c to be engaged with the rotary stem 11 described below is formed on its inner circumference. In this embodiment, the thread pitch of the female thread part 3c is set at 0.55 mm.

The lower end of the bonnet 3 is inserted into the valve chamber 1b in the body 1, and by tightening the bonnet nut 4, it is pressed and fixed to the body 1 side.

In the upper outer circumference of the bonnet 3, a tubular indicator 16 is fitted, and a cap nut 17 threadably mounted on the upper end of the bonnet 3 fastens the indicator 16.

The disc 6 is elevatably inserted into the fitting interior 3a of the bonnet 3, and a diaphragm abutment piece 8 made of synthetic resin which permanently abuts against the upper surface of the middle of the diaphragm 2 is fitted to its lower end. The disc 6 is always subject to the upwardly thrusting force of the spring 7 inserted between the disc and the holding adapter 5.

The stem 9 is elevatably inserted into the bonnet 3, and presses down the disc 6 and diaphragm holder 8 to cause the middle of the diaphragm 2 to contact with the valve seat 1c, and it is composed of the slide stem 10 and rotary stem 11.

The slide stem 10 is hollow, and is elevatably inserted into the bonnet 3 in the rotation forbidden state, and its lower end abuts against the disc 6. In this embodiment, the slide stem 10 is free to move up and down in the bonnet 3 but is not allowed to rotate by engaging the front end of the locking screw 18 threadably fitted in the bonnet 3 with the longitudinal guide groove 10b formed in its outer circumference. In the inner circumference of the slide stem 10, a female thread part 10a in a smaller thread pitch than the thread pitch of the female thread part 3c of the bonnet 3 is formed. In this embodiment, the thread pitch of the female thread part 10a is set at 0.5 mm.

On the other hand, the rotary stem 11 is formed by an integral coupling of a first member 11' in an inside shaft form and a second member 11'' in an outside tubular form, and is disposed on top of the slide stem 10 coaxially therewith, and is elevatably installed in the bonnet 3 so that its upper part may project from above the bonnet 3.

More specifically, the first member 11' is in a shaft form possessing a tapered part 11b in the middle. A first male thread part 11a to be engaged with the female thread part 10a of the slide stem 10 is formed in the lower outer circumference, the first member 11' is screwed into the slide stem 10 with its upper part projecting from the bonnet 3. In this embodiment, the thread pitch of the first male thread part 11a is set at 0.5 mm.

The second member 11'' is tubular, and a second male thread part 11c to be engaged with the female thread part 3c of the bonnet 3 is formed in the lower outer circumference, the second member 11'' is screwed into the bonnet 3 with its upper part projecting from the bonnet 3. In this embodiment, the thread pitch of the second male thread part 11c is set at 0.55 mm.

The first member 11' and second member 11'' are integrally coupled and fixed by inserting the first member 11' into the second member 11'' for the upper part to project through the second member 11'', and tightening this projecting upper part by a fixing nut 19. At this time both the members 11', 11'' are aligned by the taper part 11b, and the first male thread part lla and second male thread part 11c are concentric.

The thread direction of the female thread part 3c of the bonnet 3, female thread part 10a of the slide stem 10, first male thread part 11a of the first member 11'', and the second male thread part 11c of the second member 11'' is determined so that when the rotary stem 11 is rotated to descend the slide stem 10 also descends.

The handle 12 is fixed on the upper part of the second member 11'' of the rotary stem 11 by means of handle fixing screw 20, and is composed of a generally tubular handle main body 12' with a closed upper end and a tubular locking handle 12''. The lock handle 12'' is loosely mounted on the lower end of the handle main body 12' with an 0-ring 21 fitted between the handle main body 12' and lock handle 12'' and is movable in a direction orthogonal to the axial line Y of the stem 9. The lock handle 12'' encloses the upper outer circumference of the bonnet 3 (the outer circumference of the indicator 16 and cap nut 17). As the lock handle 12'' rotates and moves up and down along the outer circumference of the indicator 16, the opening degree of the control valve and the flow rate adjustment rate can be read directly.

Coupling mechanism 13 is provided at the engagement parts of the handle main part 12' and locking part 12'' so as to fix the parts together for rotational and longitudinal movement but to allow limited relative movement orthogonal to the axial line 9 of the stem.

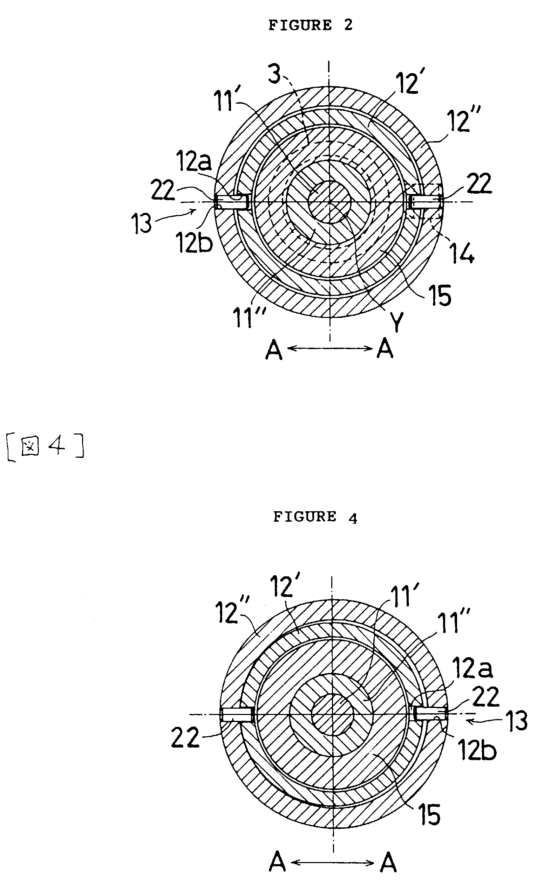

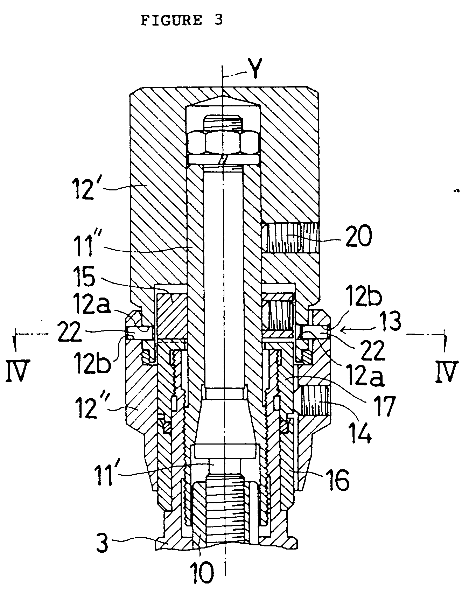

More specifically, as shown in Figures 2 and 3, the coupling mechanism 13 is composed of a pair of guide holes 12a provided oppositely at the lower end of the handle main body 12' in a direction orthogonal to the axial line of the handle 12, a pair of mounting holes 12b pierced in the upper end of the lock handle 12'' and confronting the guide holes 12a, and a pair of guide pins 22 interference-fitted to the mounting holes 12b at one end and clearance-fitted to the guide holes 12a at the other end. Therefore the two guide pins 22 permit the lock handle 12'' to be movable in the axial line direction (arrow A-A direction) of the guide pin 22 only by the distance equal to the gap between the inner circumference of the lock handle 12'' and the outer circumference of the indicator 16 and cap nut 17, but make it immovable in the rotating direction.

The lock screw 14 is screwed into the lock handle 12'' and can fasten the lock handle 12'' to the bonnet 3 (cap nut 17) side.

In the present embodiment, the lock screw 14 is screwed into the lock handle 12'' so as to be orthogonal to the axial line Y of the stem 9 and parallel to the axial line of the two guide pins 22, and the forward end abuts against the outer circumference of the cap nut 17.

An annular stopper 15 is fitted around the upper outer circumference of the second member 11'' of the rotary stem 11, and is fixed to the second member 11'' by the fixing screw 23, and abuts against the top surface of the cap nut 17 when fully closing the control valve (when the middle of the diaphragm 2 is seated on the valve seat 1c), thereby preventing the descent of the stem 9.

The position where the stopper 15 is fixed is set so that the stopper 15 and cap nut 17 may contact with each other when the rotary stem 11, slide stem 10 and disc 6 are lowered and the diaphragm 2 is seated on the valve seat 1c.

The operation of the flow control valve is described below.

When the handle 12 is rotated normally and reversely, the rotary stem 11 also rotates normally and reversely, and the rotary stem 11 is moved up and down while rotating, by means of the second member 11'' of the rotary stem 11 engaged with the bonnet 3.

As the rotary stem 11 moves up and down while rotating, the slide stem 10 engaged with the first member 11' of the rotary stem 11 is moved up and down in the rotation forbidden state made possible by engagement of the locking screw 18 and guide groove 10b. At this time, the slide stem 10 moves up and down by the distance equal to the difference between the thread pitch of the second male thread part 11c and the thread pitch of the first male thread part 11a per revolution of the handle 12. In this embodiment, the slide stem 10 moves up and down by 0.05 mm revolution of the handle 12.

When the slide stem 10 descends, the middle of the diaphragm 2 is pushed down by the disc 6 and diaphragm holder 8 to abut against the valve seat 1c. When the slide stem 10 ascends, the disc 6 is raised by the thrusting force of the spring 7, while the diaphragm 2 restores its original shape by its elastic force and fluid pressure, thereby departing from the valve seat 1c. As a result, the effective flowing area of the fluid passage 1a is adjusted by the diaphragm 2, and the flow rate of the fluid is controlled.

The valve opening degree and flow rate are directly read from the indicator 16 below the lower end position of the lock handle 12''.

The control valve moves the slide stem 10 up and down by the thread pitch difference between the first male thread part 11a and second male thread part 11c, and therefore the vertical moving extent of the slide stem 10 per revolution of the rotary stem 11, that is, the stroke of the diaphragm 2 can be adjusted very finely, and fine flow rate can be adjusted at high precision even by manual operation.

When closing the control valve, meanwhile, the stopper 15 provided in the second member 11" abuts against the top surface of the cap nut 17 to stop the descent of the rotary stem 11, and therefore the handle 12 is not tightened excessively, and damage of the diaphrag due to excessive tightening can be prevented.

In the control valve, moreover, when the handle 12 is rotated and the flow rate reaches a set value, the handle 12 may be locked and fastened to the bonnet 3 (cap nut 17) side by the lock screw 14, and the rotary stem 11 is prevented from rotating or moving up and down, so that the flow rate may be maintained at a specified rate.

That is, by tightening the lock screw 14 screwed on the lock handle 12", as shown in Figure 3 and Figure 4, since one end of the guide pin 22 is clearance-fitted to the handle main body 12', only the lock handle 12" is allowed to move in the axial direction of the guide pin 22 by the distance equal to the gap between the inner circumference of the lock handle 12" and the outer circumference of the indicator 16 and cap nut 17, with the result that the inner circumference of the lock handle 12'' is pressed to the outer circumference of the indicator 16 and cap nut 17. As a result, the handle 12 is locked, and the rotary stem 11 is prevented from rotating and moving up and down.

When the lock handle 12'' is moved in a direction orthogonal to the axial line Y of the stem 9, the handle main body 12' is not subject to the pressing force applied in the direction in which the lock handle 12'' is pressed and moved and hence the stem 9 does not receive the force applied in the same direction. Accordingly, the stem 9 is not dislocated by locking of the handle 12, and the set flow rate does not change between before and after locking of the handle 12.

In this embodiment, the diaphragm 2 is designed to directly contact with or depart from the valve seat 1c but by disposing a disc 6 below the diaphragm 2, the disc 6 may be caused to contact with or depart from the valve seat 1c.

In the above embodiment, the first member 11' and second member 11'' are separate pieces, and the both are coupled and fixed by the fixing nut 19, but they may be formed integrally. In the above embodiment, the rotary stem 11 is rotated manually, but may be driven by a motor or the like.

In the embodiment, the descending extent of the rotary stem 11 is restricted by abutting the stopper 15 against the top surface of the cap nut 17, but, if the cap nut 17 is not used, the stopper 15 may contact with the top surface of the bonnet 3 to restrict the descending extent of the rotary stem 11.

In the embodiment, one end of the guide pin 22 is interference-fitted to the mounting hole 12b and the other end is clearance-fitted to the guide hole 12a, but one end of the guide pin 22 may be interference-fitted to the guide hole 12a, and the other end may be clearance-fitted to the mounting hole 12b.

In the embodiment, the coupling mechanism 13 is composed of mounting holes 12b, guide holes 12a, and guide pins 22, but the constitution of the coupling mechanism 13 is not limited to the above embodiment alone, but the constitution is free as far as the handle main body 12' and the lock handle 12'' can be coupled, and only the lock handle 12'' can be moved in the direction orthogonal to the axial line Y of the stem 9. For example, a groove (or stopping protrusion) may be formed in the lower end surface of the handle main body 12' in a direction orthogonal to the axial line Y of the handle 12, and a stopping protrusion (or groove) to be engaged with the groove (or stopping protrusion) is formed in the upper end surface of the lock handle 12'', and the handle main body 12'' and lock handle 12'' may be coupled movably in a direction orthogonal to the axial line Y.

In the embodiment, the forward end of the lock screw 14 abuts against the cap nut 17, but, if the cap nut 17 is not used, the forward end of the lock screw 14 may contact with the outer circumference of the bonnet 3 or the outer circumference of the indicator 16 so as to lock handle 12''.

In the invention, as described above, the handle for rotating the stem is composed of a handle main body fixed to the upper end of the stem and a tubular lock handle mounted loosely on the lower end of the handle main body, coupled in such a manner that the lock handle may be allowed to move in a direction orthogonal to the axial line of the stem, and enclosing the upper outer circumference of the bonnet, the lock screw is provided in the lock handle in a direction orthogonal to the axial line of the stem, and therefore if the handle is locked by the lock screw, only the lock handle moves in a direction orthogonal to the axial line of the stem, while the handle main body does not receive the force in the direction in which the lock handle is moved. Hence the stem does not receive force in the same direction either. As a result, the stem is not dislocated by locking of the handle, and the set flow rate does not change between before and after locking of the handle.

## Claims

1. A fluid flow control valve comprising a flow passage (1a), a valve seat (1c) in the passage selectively openable by a valve member, a rotatable stem (9) controlling the valve means by moving longitudinally in response to rotation within a bonnet (3) and a handle (12) for rotating the stem, the handle being lockable against the bonnet (3) to prevent rotationan thus set the flow rate, characterised in that the handle (12) comprises a main part (12') fixed to the stem (9) and a locking part (12'') coupled to the main part so as to allow relative movement in a direction laterally of the stem longitudinal axis the locking part (12'') including a locking screw (14) movable to act against the bonnet (3) to prevent rotation of the handle thus setting a rate of flow through the valve.

2. A valve according to Claim 1 wherein coupling of the handle main part (12') and the locking part (12'') is achieved by a coupling mechanism (13) composed of a pair of opposed guide holes (12a) at the lower end of the handle main body (12') in a direction orthogonal to the axial line of the handle (12), a pair of mounting holes (12b) pierced in the upper end of the lock handle (12'') and matching the guide holes (12a), and a pair of guide pins (22) interference-fitted to the mounting holes (12b) at one end and clearance-fitted to the guide holes (12a) at the other end.

3. A valve according to Claim 2, wherein the guide pins (22) have one end clearance-fitted to the mounting holes (12b), and the other end interference-fitted to the guide holes (12a).

4. A valve according to Claim 1, wherein coupling of the handle main part (12') and the locking part (12") is achieved by a coupling mechanism composed of a groove or engaging protrusion formed in a direction orthogonal to the axial line Y of the handle (12) at the lower end face of the handle main body (12') and an engaging protrusion or groove protrusion formed in a direction orthogonal to the axial line Y at the upper end face of the lock handle 12" for engagement with the above-mentioned groove or engaging protrusion.

5. A valve according to any of the preceding claims wherein the flow control valve is a diaphragm type flow control valve designed to cause the diaphragm (2) to directly contact with or depart from the valve seat (1c) by means of an elevating motion of the stem (9).

6. A valve according to any of the preceding claims wherein the stem (9) is a stem (9) which moves up and down by a distance corresponding to a difference betweentwo thread pitches for one revolution of the handle (12).

## Patentansprüche

1. Durchflußregelventil mit einem Strömungskanal (1a), einem von einem Ventilglied selektiv zu öffnenden Ventilsitz (1c) in dem Strömungskanal, einem drehbaren Stössel (9) zur Steuerung des Ventilgliedes durch Längsverstellung abhängig von der Drehung innerhalb einer Abdeckhaube (3) und einem Handgriff (12) zum Drehen des Stössels, wobei der Handgriff gegenüber der Abdeckhaube (3) verriegelbar ist, um ein Drehen nach Einstellung der Strömungsrate zu verhindern, **dadurch gekennzeichnet, daß** der Handgriff (12) ein dem Stössel (9) fest zugeordnetes Hauptteil (12') und ein Verriegelungsteil (12") aufweist, das mit dem Hauptteil so gekoppelt ist, daß eine Relativbewegung in der Richtung der Stössellängsachse möglich ist, wobei das Verriegelungsteil (12") eine Verriegelungsschraube (14) einschließt, die durch ihre Bewegung zum Einwirken auf die Abdeckhaube (3) zu bringen ist, um die Drehung des Handgriffes nach der Einstellung einer Strömungsrate durch das Ventil zu verhindern.

2. Ventil nach Anspruch 1, bei dem das Koppeln zwischen dem Handgriffhauptteil (12') und dem Verriegelungsteil (12") durch einen Koppelmechanismus (13) bewirkbar ist, der von einem Paar einander gegenüberliegender orthogonal zur Längsachse des Handgriffs (12) verlaufender Führungsöffnungen (12a) am unteren Ende des Handgriffhauptteiles (12'), einem Paar durch das obere Ende des Verriegelungsteiles (12") des Handgriffes geführte, auf die Führungsöffnungen (12a) ausgerichteter Montageöffnungen (12b) und einem Paar Führungszapfen (22) gebildet wird, wobei die Führungszapfen dauerhaft den Montageöffnungen (12b) und ein- und ausbringbar den Führungsöffnungen (12a) zugeordnet sind.

3. Ventil nach Anspruch 2, bei dem die Führungszapfen (22) mit ihren einen Enden ein- und ausbringbar den Montageöffnungen (12b) und mit ihren anderen Enden dauerhaft den Führungsöffnungen zugeordnet sind.

4. Ventil nach Anspruch 1, bei dem das Koppeln zwischen dem Handgriffhauptteil (12') und dem Handgriffverriegelungsteil (12") durch einen Koppelmechanismus bewirkbar ist, der entweder von einer orthogonal zur Längsachse Y des Handgriffs (12) in der unteren Endfläche des Handgriffshauptteil verlaufenden Nut und einer orthogonal zur Längsachse Y des Handgriffes (12) auf die obere Endfläche des Handgriffverriegelungsteils zum Zusammenwirken mit der Nut des Handgriffhauptteiles aufgesetzten Verriegelungsleiste oder von einer entsprechend der Nut im Handgriffhauptteil auf dessen Unterseite aufgesetzten Verriegelungsleiste und einer entsprechend der Verriegelungsleiste des Handgriffverriegelungsteiles in dessen oberer Endfläche verlaufenden Nut gebildet wird.

5. Ventil nach einem der vorstehenden Ansprüche, bei dem das Durchflußregelventil ein Membranventil ist, bei dem die Membrane (2) zum direkten Zusammenwirken mit oder zum Abheben von dem Ventilsitz (1c) mit der Längsverstellung des Stössels (9) bewirkt werden.

6. Ventil nach einem der vorstehenden Ansprüche, bei dem der Stössel (9) um einen Weg angehoben und gesenkt wird, der der Differenz zwischen zwei Schraubensteigungen für eine Umdrehung des Handgriffs (12) entspricht.

## Revendications

1. Vanne de régulation de débit de fluide comprenant un passage d'écoulement (1a), un siège de vanne (1c) dans le passage, pouvant être ouvert sélectivement par un élément de vanne, une tige rotative (9) commandant les moyens formant vanne en se déplaçant longitudinalement en réponse à la rotation à l'intérieur d'un chapeau de vanne (3) et une poignée (12) pour faire tourner la tige, la poignée pouvant être bloquée contre le chapeau de vanne (3) afin d'empêcher la rotation et de déterminer par conséquent le débit d'écoulement, caractérisée en ce que la poignée (12) comprend une partie principale (12') fixée à la tige (9) et une partie de blocage (12") couplée à la partie principale de façon à permettre un mouvement relatif dans une direction latérale à l'axe longitudinal de la tige, la partie de blocage (12") comprenant une vis de blocage (14) mobile pour agir contre le chapeau de vanne (3) afin d'empêcher la rotation de la poignée, de façon à déterminer par conséquent un débit d'écoulement à travers la vanne.

2. Vanne selon la revendication 1, dans laquelle le couplage de la partie principale (12') et de la partie de blocage (12") de la poignée est réalisé par un mécanisme de couplage (13) composé d'une paire de trous de guidage opposés (12a) à l'extrémité inférieure du corps principal (12') de la poignée dans une direction orthogonale à la ligne axiale de la poignée (12), d'une paire de trous de montage (12b) percés dans l'extrémité supérieure de la poignée de blocage (12") et s'adaptant aux trous de guidage (12a), et d'une paire de broches de guidage (22) fixées par interférence aux trous de montage (12b) à une extrémité et fixées avec un espacement aux trous de guidage (12a) à l'autre extrémité.

3. Vanne selon la revendication 2, dans laquelle les broches de guidage (22) ont une extrémité fixée avec un espacement aux trous de montage (12b) et l'autre extrémité fixée par interférence aux trous de guidage (12a).

4. Vanne selon la revendication 1, dans laquelle le couplage de la partie principale (12') et de la partie de blocage (12") de la poignée est réalisé par un mécanisme de couplage composé d'une rainure ou d'une saillie de prise formée dans une direction orthogonale à la ligne axiale Y de la poignée (12) à la face d'extrémité inférieure du corps principal (12') de la poignée et d'une saillie de prise ou d'une rainure de prise formée dans une direction orthogonale à la ligne axiale Y à la face d'extrémité supérieure de la poignée de blocage (12") pour venir en prise avec la rainure ou la saillie de prise mentionnée ci-dessus.

5. Vanne selon l'une quelconque des revendications précédentes, dans laquelle la vanne de régulation de débit est une vanne de régulation de débit du type à diaphragme conçue pour faire venir le diaphragme (2) directement en contact avec le siège de vanne (1c) ou pour lui faire quitter celui-ci au moyen d'un mouvement d'élévation de la tige (9).

6. Vanne selon l'une quelconque des revendications précédentes, dans laquelle la tige (9) est une tige (9) qui se déplace vers le haut et vers le bas d'une distance correspondant à une distance entre deux pas de filetage pour une révolution de la poignée (12).
